Europäisches Patentamt

**European Patent Office**

Office européen des brevets

(11) Numéro de publication: **0 011 540**
**B1**

(12) **FASCICULE DE BREVET EUROPEEN**

(45) Date de publication du fascicule du brevet: **10.08.83**

(51) Int. Cl.³: **H 04 L 11/20**

(21) Numéro de dépôt: **79400816.9**

(22) Date de dépôt: **31.10.79**

(54) **Dispositif d'interface entrée-sortie entre un commutateur de données et une pluralité de voies de transmission.**

(30) Priorité: **13.11.78 FR 7832430**

(43) Date de publication de la demande:
**28.05.80 Bulletin 80/11**

(45) Mention de la délivrance du brevet:
**10.08.83 Bulletin 83/32**

(84) Etats contractants désignés:
**BE DE GB NL**

(56) Documents cités:
**FR - A - 2 331 221**

(73) Titulaire: **Etablissement Public de Diffusion dit "Télédiffusion de France"**
**21-27 rue Barbès**
**F-92120 Montrouge (FR)**

(73) Titulaire: **Renoulin, Roger Jean**
**29, Rue René Jean Mailleux**
**Thorigné-sur-Vilaine F-35510 Cesson (FR)**

(73) Titulaire: **Cheminel, Daniel**
**Lycée de Bréquigny Avenue de Bréquigny**
**F-35100 Rennes (FR)**

(72) Inventeur: **Renoulin, Roger**
**29, rue Jean Mailleux Thorigné s/Vilaine**
**F-35510 Cesson (FR)**
Inventeur: **Cheminel, Daniel**
**Lycée de Bréquigny Ave. de Bréquigny**
**F-35100 Rennes (FR)**
Inventeur: **Thepaut, Bernard**
**16, Chemin François Luzel**
**F-35740 Pace (FR)**

(74) Mandataire: **Le Guen, Louis François**
**13, rue Emile Bara BP 91**
**F-35802 Dinard Cedex (FR)**

Courier Press, Leamington Spa, England.

Dispositif d'interface entrée-sortie entre un commutateur de données et une
pluralité de voies de transmission

La présente invention concerne un dispositif d'interface entrée-sortie monté entre un commutateur de données et une pluralité de voies de transmission de données entrantes et sortantes, les données étant traitées dans le commutateur de données par "paquets" et étant transmises sur les voies de transmission par "trames", chaque trame contenant un ou plusieurs paquets de données, chaque paquet étant formé d'une pluralité d'octets de données, conformément aux normes de transmission internationales.

On rappelle que, dans la technique de la commutation de données on distingue la commutation de "paquets", dans laquelle, chaque paquet comprend, devant les données utiles, une série d'octets formant une "étiquette" qui contient toutes les informations utiles à l'acheminement du paquet, c'est à dire par exemple, la destination, le numéro d'ordre, le format, etc. Par ailleurs, on sait grouper, pour les transmettre sur une même voie de transmission, plusieurs paquets pour former une trame. Dans une trame, les différents paquets concernent généralement des communications différentes que l'on achemine par la même voie de transmission. En tête et en queue de trame sont ajoutés des octets de synchronisation permettant de reconnaître le début et la fin d'une trame.

Dans la quite de la description, on suppose que le commutateur de données est capable d'inscrire dans une zone de mémoire à double ports d'entrée et de sortie une séquence de paquets destinés à constituer le contenu utile d'une trame et d'indiquer au dispositif d'interface entrée-sortie toutes les indications concernant la situation de cette zone. On suppose également que le commutateur de données est capable de lire dans une zone de mémoire à double ports d'entrée et de sortie une séquence de paquets extraits d'une trame et inscrits dans cette zone par le dispositif d'interface entrée-sortie, toutes les indications concernant la situation de cette zone ayant été préalablement indiquée par le commutateur au dispositif d'interface.

Par ailleurs, les voies de transmission sont supposées classiques c'est à dire qu'elles sont bidirectionnelles et comportent deux fils aller, l'un portant les éléments binaires ou bits utiles et l'autre l'horloge aller, et deux fils retour, l'une portant les bits utiles et l'autre l'horloge retour. De tels dispositifs décrits dans le document FR.A.2 331 221 ne permettent pas cependant une gestion des trames pour chaque voie cycliquement.

Un objet de la présente invention consiste à prévoir un dispositif d'interface entrée-sortie capable de gérer pour chaque voie entrante ou sortante les trames de données.

Suivant une caractéristique de l'invention, une telle gestion est obtenue à l'aide du dispositif conforme à l'actuelle revendication 1.

Suivant une autre caractéristique, il est prévu un dispositif qui comporte un étage octet et une processeur, l'étage d'octets comprenant des mémoires d'opération d'octets, avec leurs opérateurs associés, une mémoire de séquence d'octets, avec son opérateur séquenceur, ledit processeur étant relié à certains opérateurs, au moins, des étages d'élément binaire et d'octet par une mémore d'entrée du type "premier entré—premier sorti" et une mémoire de sortie du type "boîte à lettres", laquelle est adressée en lecture, comme les autres mémoires d'opération d'octets, par ladite mémoire de séquence d'octets laquelle est rendue active, par son opérateur séquenceur, au huitième élément binaire d'un octet quand elle est adressée par ledit explorateur.

Suivant une autre caractéristique, il est prévu un dispositif dans lequel une desdites mémoires de l'étage élément binaire, avec son opérateur, effectue le calcul de redondance cyclique, élément binaire par élément binaire, à la fois pour les trames reçues et pour les trames émises.

Suivant une autre caractéristique, il est prévu un dispositif dans lequel, dans l'étage octet, une des mémoires d'opérations d'octets, avec son opérateur, assure la transparence à l'émission comme à la réception.

Suivant une autre caractéristique, il est prévu un dispositif dans laquel, dans l'étage élément binaire, une desdites mémoires, avec son opérateur, assure la synchronisation octet à l'émission et à la réception.

Les caractéristiques de la présente invention mentionnées ci-dessus, ainsi que d'autres, apparaîtront plus clairement à la lecture de la description d'un exemple de réalisation, ladite description étant faite en relation avec les dessins joints, parmi lesquels:

la Fig. 1 est un bloc-diagramme du dispositif d'interface entrée-sortie suivant l'invention,

la Fig. 2 est une blocdiagramme du processeur compris dans le dispositif de la Fig. 1, et

les Figs. 3a à 3n sont des diagrammes de signaux illustrant le fonctionnement du dispositif de la Fig. 1 et du processeur de la Fig. 2.

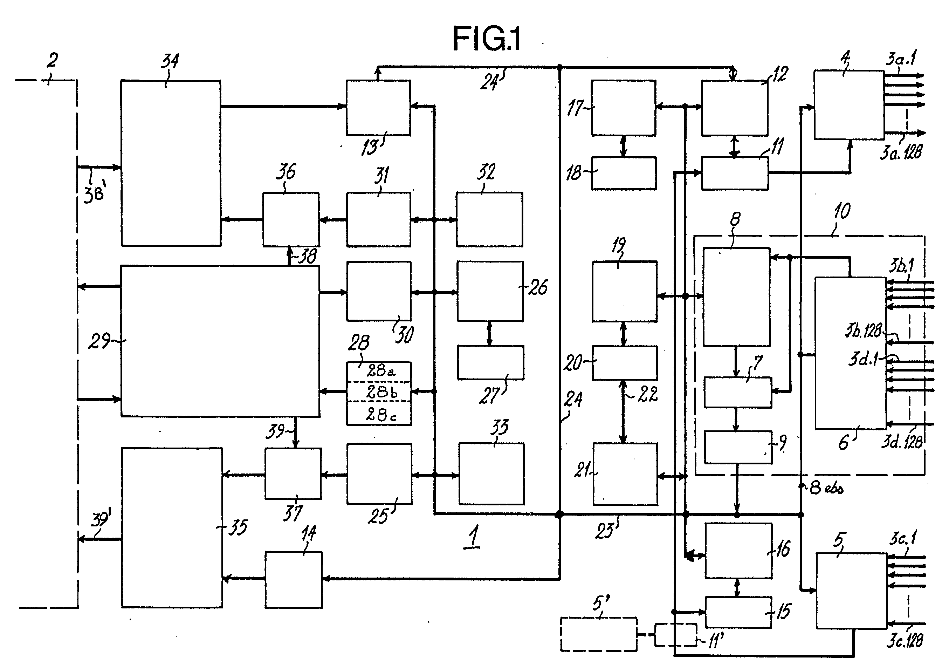

A la Fig. 1, on a représenté un dispositif d'interface entrée-sortie 1 monté entre un commutateur de données 2 et une pluralité de voies bidirectionneles composées de lignes sortantes 3a.1 à 3a.128 et 3b.1 à 3b.128, et de lignes entrantes 3c.1 à 3c.128 et 3d.1 à 3d.128. Les lignes 3a.1 à 3a.128 sont reliées aux sorties correspondantes d'un démultiplexeur d'émission 4. Les lignes 3c.1 à 3c.128 sont reliées aux entrées d'un multiplexeur de réception 5. Ces lignes 3a et 3c acheminent les données utiles. Les lignes 3b.1 à 3b.128 et 3d.1 à 3d.128 sont reliées aux bornes d'un multiplexeur 6 et acheminent les signaux d'horloge d'éléments binaires. Une voie sortante est constituée d'une ligne 3a et d'une ligne 3b, les signaux d'horloge de la ligne 3b rythmant la transmission des bits sur la ligne 3a de même rang. Réciproquement une voie entrante est constituée d'une ligne 3c et d'une ligne 3d, les signaux d'horloge de la ligne 3d rythmant la transmission des bits sur la ligne 3c de même rang. Les rythmes de signaux d'horloge peuvent être différents d'une ligne à une autre. Une voie comprend quatre lignes 3a, 3b, 3c et 3d de même rang.

Le multiplexeur 6 est relié, d'une part, à un comparateur 7 et, d'autre part, à une mémoire d'état de ligne 8. L'autre entrée du comparateur 7 est reliée à la sortie de la mémoire d'état 8. La mémoire d'état 8 contient autant de mots de 1 bit que de lignes 3b et 3d, soit 256 mots de 1 bit. La sortie du comparateur 7 est reliée à une entrée de commande d'un compteur d'exploration 9. La sortie du compteur 9 est reliée à l'entrée d'avancement de 6.

L'ensemble des circuits 6 à 9 forment un explorateur 10 qui est analogue aux explorateurs qui font la recherche des changements d'états sur les lignes de abonnés téléphoniques. A chaque compte de 9, qui compte de 1 à 256, le multiplexeur 6 transmet à 7 l'état de la ligne 3b ou 3d à laquelle il est momentanément relié. Au même instant, le mot précédemment enregistré dans la mémoire 8 concernant cette ligne est lu et appliqué à l'autre entrée de 7. Si les états des entrées de 7 sont identiques, ou si l'état appliqué par 6 à 7 est au niveau bas, la sortie de 7 n'intervient pas sur l'avance du compteur 9. Si les états comparés sont différents, avec un état de niveau haut appliqué par 6, la sortie du comparateur 7 arrête momentanément le compte du compteur 9.

En pratique, on utilise dans l'explorateur 10 une technologie qui lui permet, en l'absence d'arrêt momentané du compteur 9 provoqué comme on l'a vu ci-dessus, de balayer l'ensemble des 256 lignes 3b et 3d en 250×256=64 microsecondes, avec une vitesse de scrutation par ligne de 250 nanosecondes.

L'entrée des bits du démultiplexeur d'émission 4 est reliée à la sortie série d'un registre à décalage 11. La sortie de données du multiplexeur de réception 5 est reliée à l'entrée série du registre à décalage 11. Le registre 11 a ses entrées-sorties parallèles reliées à l'entrée-sortie d'une mémoire de sérialisation désérialisation 12 constituée de 256 mots de 8 bits, c'est à dire 256 octets dont un par ligne entrante ou sortante.

L'entrée d'octet de la mémoire 12 est reliée à la sortie d'octet d'une mémoire 13 et la sortie octet de la mémoire 12 est reliée à l'entrée octet d'une mémoire 14.

Par ailleurs, la sortie de données du multiplexeur de réception 5 est également reliée à l'entrée série d'un opérateur 15 associé à une mémoire 16 qui est constituée de 256 mots de 16 bits. L'opérateur 15 et la mémoire 16 interviennent dans le calcul du code de redondance cyclique prévu pour protéger les octets contre les erreurs de transmission. Il doit être bien entendu que le calcul proprement dit ne fait pas partie de la présente invention, mais est de préférence classique. Pour comprendre le fonctionnement de l'interface, il suffit de savoir que chacun des 256 mots de la mémoire 16 est affecté à une ligne entrante ou sortante et que chaque bit entré dans l'opérateur 15 est traité en fonction du mot correspondant à la ligne qui transmet ce bit.

Il est encore prévu une mémoire de transparence 17 associée classiquement à un opérateur 18. La mémoire 17 supervise le contenu de la mémoire d'octets 12 et, au besoin, agit sur ce contenu en établissant ce qu'il est convenu classiquement d'appeler la "transparence" et qui consiste essentiellement à modeler les messages numériques de façon qu'une séquence de cinq "1" soit suivie d'un "0" afin d'éviter toute confusion d'un mot ou octet de données avec un mot ou octet de synchronisation "01111110" appelé "drapeau de synchronisation".

Il est encore prévu une mémoire d'horloge d'octet 19 associée classiquement à un compteur 20. La mémore 19 est constituée de 256 mots de 3 bits. Elle a pour fonction de compter pour chaque ligne les ebs transmis ou reçus—modulo 8—si bien que chaque mot indique le rang du bit transmis ou reçu dans son octet pour la ligne correspondant au mot. La lecture de la mémoire 19 permet de déterminer quand il faut inscrire dans la mémoire 12 un nouvel octet à transmettre ou lire un nouvel octet reçu.

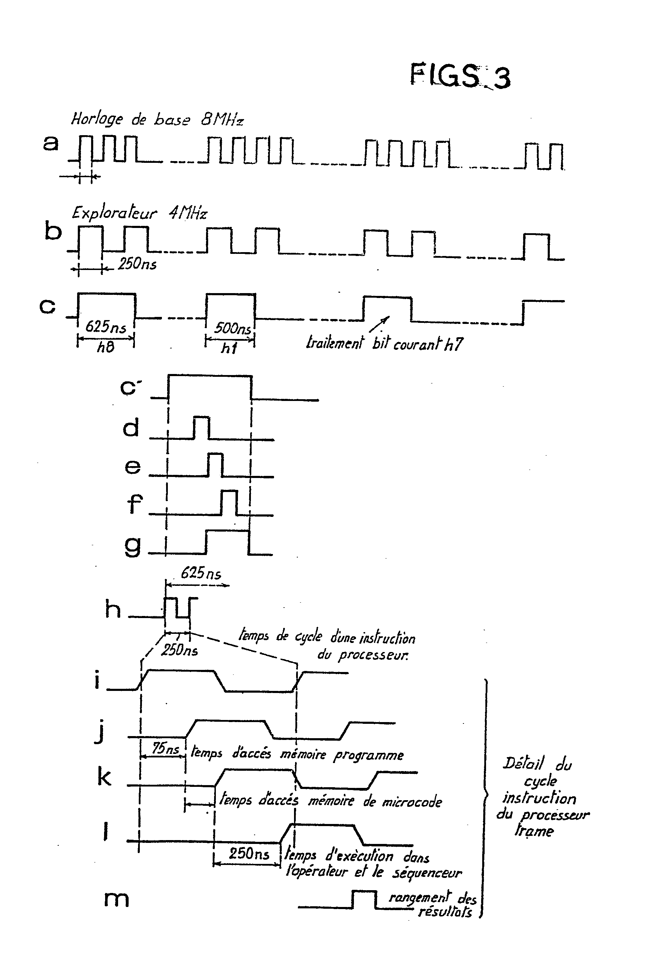

On a encore prévu une base de temps 21 qui sert d'horloge de fonctionnement pour les circuits 4 à 20 qui viennent d'être mentionnés. En fait, l'ensemble des circuits 4 à 20, plus 21, contribue au traitement des bits transmis ou reçus bit par bit et un peut appeler cet ensemble le "niveau élément binaire" de l'interface. L'horloge de base du circuit 21 a une fréquence de 8 MHz, comme le montre la Fig. 3a.

On va maintenant décrire le fonctionnement du niveau élément binaire en se référant à la fois, à la Fig. 1 et aux Figs. 3a à 3i. Tout d'abord, l'explorateur 10 fonctionne à une fréquence de 4 MHz, comme l'indique la Fig. 3b, ce qui veut dire que le compteur 9 qui comporte 256 points compte à cette cadence, sauf quand une transition positive est détectée par le comparateur 7. Le compte du compteur 9 determine constamment les adresses des mots concernant la ligne explorée par le démultiplexeur 6 dans les mémoires 8, 12, 16, 17 et 19, car, comme le montre la Fig. 1, la sortie du compteur 9 est reliée aux entrées d'adressage de 4, 5, 6, 8, 12, 16, 17 et 19 par un bus 23. Quand une transition positive d'horloge est détectée, le compteur 9 s'arrête soit pendant une durée de 500 ns, soit pendant une durée de 626 ns, comme le montre la Fig. 3c.

Dés l'arrêt de 9, la base de temps 21, reliée à 9, déclenche une microséquence comportant 5 phases, comme suit:

— phase 1, détection du changement d'état et d'arrêt de l'exploration sur les mots de la ligne concernée dans 8, 12, 16, 17 et 19;
— phase 2, chargement du contenu des mots de la ligne concernée dans 11, 15, 18 et 20 qui constituent les opérateurs;
— phase 3, activation des opérateurs 11, 15, 18 et 20, avec une entrée du bit lu par le multiplexeur 5 si la ligne considérée est entrante, avec décalage des bits déjà transmis à 11 par 12 en phase 2 ou avec sortie du dernier bit de 11 vers de démultiplexeur 4 si la ligne considérée est sortante, avec décalage des bits déjà transmis à 11 par 12 en phase 2;
— phase 4, rangement du résultat des opérations effectuées par les opérateurs dans les mots associés des mémoires associées;
— phase 5, reprise de l'exploration.

D'une manière plus détaillée, en phase 3, l'opérateur 15 calcule le code de redondance cyclique en utilisant chaque bit reçu de 5, si la ligne concernée est entrante et de 11, si la ligne concernée est sortante. Pour une ligne entrante, quand le bit introduit dans 15 est le dernier élément binaire de données d'une trame, l'opérateur 15 contient donc le résultat positif ou négatif du calcul de validité du code de redondance cyclique. Un élément binaire de validation ou d'invalidation est alors transmis, avec un octet de retard, dû à la détection de fin de trame, à la mémoire 28, accompagné de l'identité de la ligne entrante concernée. Pour une ligne sortante, après le dernier octet de données utiles transmis de 13 à 12 pour émission sur la ligne sortante considérée, sous la commande de l'opérateur 27 d'une mémoire 26, les deux octets, soit 16 bits, présents dans le mot de la mémoire 16 de la ligne, sont successivement envoyés dans 11, pour être transmis sur la ligne sortante avant le dernier octet de synchronisation marquant la fin de la trame. On verra dans la suite comment l'opérateur 27 de la mémoire 26 peut exécuter cet ordre.

Egalement, au cours de la phase 3, si l'opérateur 18, dont l'entrée série est reliée, d'une part, à la sortie série de 11 et, d'autre part, à l'entrée série de 11, totalise plus de cinq "1" consécutifs, une action de transparence est entreprise par l'opérateur qui fait émettre par 4 un "0" sur la ligne considéré entre deux bits de données provenant de 11 ou qui supprime le "0" provenant de 5 pour éliminer l'élément binaire de transparence ajouté par le terminal distant.

On rappelle qu'à chaque arrêt du compteur 9 le contenu du mot de la mémoire 17 qui correspond à la ligne sur laquelle l'explorateur 10 est arrêté passe dans l'opérateur 18 qui peut donc ainsi totaliser le nombre de "1" consécutifs transmis sur une ligne sortante ou reçus d'une ligne entrante. Dés la transmission ou la réception d'un "0", le contenu de l'opérateur est remis à zéro.

Au cours de la phase 3, le compteur 20, qui compte les bits par octet, est incrémenté d'une unité. A chaque fois que le compteur 20 contient le compte "8", il commande, part 22, la base de temps 21 qui prolonge l'arrêt de 500 ns du compteur 9 jusqu'à 625 ns. Le délai supplémentaire permet d'extraire l'octet de données correspondant vers la mémoire 14 à partir de la mémoire 12, s'il s'agit d'un octet de données reçu d'une ligne entrante, ou d'inscrire dans 12 un nouvel octet lu dans la mémoire 13 et à transmettre sur une ligne sortante. A noter que, dans le cas d'un octet reçu, le délai supplémentaire permet également d'extraire vers une mémoire 25 l'identité de la ligne entrante à partir du compteur 9, cette identité servant d'étiquette pour l'octet de données reçu.

La Fig. 3c illustre le temps d'arrêt du compteur 9, dans le cas où cet arrêt est de 625 ns, pendant lesquelles s'exécutent les microopérations des phases 1 à 4, plus un échange d'octet entre le niveau élément binaire et le niveau octet.

La Fig. 3d illustre le temps alloué pour l'appel de contenus des différentes mémoirs du niveau binaire dans leurs opérateurs ou registres ou compteurs, chaque contenu étant celui du mot défini par l'adresse déterminée par le contenu de 9 et qui est le même pour toutes les mémoires et est transmis par le bus 23.

La Fig. 3e illustre le temps d'exécution, dans chacun des opérateurs, registres ou compteurs, du traitement élémentaire pour lequel il est spécialisé, ce traitement pouvant être un décalage dans une registre, une incrémentation, un calcul de CRC, etc.

La Fig. 3f illustre le rangement du résultat de chaque traitement élémentaire effectué dans un opérateur, registre ou compteur dans le mot de mémoire correspondant à la même adresse.

La Fig. 3g illustre le temps alloué pour l'échange d'octet avec le niveau octet de l'interface, selon que 12 doit être chargée d'un nouvel octet à émettre ou être déchargée d'un octet reçu.

Un bus d'échange d'octets 24 relie l'étage élément binaire à l'étage octet. Plus particuliérement, le bus 24 permet de relier la mémoire 12, d'une part, à la sortie de la mémoire 13 et, d'autre part, à l'entrée de la mémoire 14. La mémoire 13 sert de mémoire tampon; elle a la structure d'une mémoire du genre "boîte aux lettres", c'est à dire de mémoire à double accès obtenu par multiplexage temporel de deux sources d'adresse, soit en amont pour les écritures ou dépôts dans la boîte à lettres, soit en aval pour les lectures ou levées de la boîte à lettres. La mémoire 13 est constituée de 128 mots de 8 bits qui, chacun, correspondent à une ligne sortante. La fonction de la mémoire 13 est de contenir l'octet à transmettre immédiatement après l'octet corres-

pondant à la même ligne et enregistré dans le mot correspondant de la mémoire 12. Le transfert d'un octet de la mémoire 13 à la mémoire 12 se fait, comme on l'a vu en relation avec la Fig. 3g décrite ci-dessus. On verra dans la suite comment on écrit les octets dans la mémoire 13.

Le mémoire 14 est une mémoire du type FiFo, ou "ler entré—ler sorti", dont une description est, par exemple, donnée dans l'article intitulé "La mémoire FIFO: conception et applications" par P. Pinson dans la revue EMI 185/15-3-74, pages 45 à 49. A chaque fois qu'un octet complet a été reçu d'une ligne entrante dans la mémoire 12, il est transmis, comme on l'a vu ci-dessus, à la mémoire 14, par 24.

A la mémoire 14 est associée, en parallèle, une autre mémoire FiFo 25 dont l'entrée est reliée, également par le bus 24, à la sortie du compteur 9 qui délivre l'adresse de la ligne entrante à laquelle correspond l'octet transmis au même instant à 14 par 12.

Dans l'étage octet, dont font partie les mémoires 13, 14 et 25, il est encore prévu une mémoire 26 associée à un opérateur 27 et constituée par 256 mots, chaque mot correspondant à une ligne entrante ou sortante. La mémoire 26 sert, en fait, à aiguiller les octets reçus ou à transmettre. En effet, comme il est courant dans la technique de transmission de données, les paquets transmis sur les lignes sont groupés par trames. Or classiquement, une trame commence par un octet ou drapeau de synchronisation, tel que "01111110", suivi de deux octets de procédure, et se termine par un octet ou drapeau de synchronisation de même contenu, précédé de deux octets de code de redondance cyclique. Seuls les octets de données se trouvant, dans une trame, entre le second octet de procédure et le premier octet de code de redondance cyclique ou CRC, sont, à l'intérieur de l'interface, transmis comme on l'a décrit cidessus, soit entre 13 et 12, soit entre 12 et 14.

A la réception d'un drapeau de synchronisation, que l'on suppose être le premier d'une trame reçue sur une ligne entrante, on a dans le registre 11 le mot "01111110", lequel est reconnu par des moyens propres associés à 11, non montrés, et ces moyens, qui peuvent consister en un comparateur, inhibent le compteur 18, provoquant le retour à 1 du compteur 20, qui se trouve ainsi initialisé, initialisent un opérateur séquenceur 27, associé à une mémoire 26, et détruit le mot du registre 11 au lieu de ranger dans le mot de la mémoire 12, à la phase 4 suivante.

La mémoire 26 est une mémoire analogue aux mémoires 12, 16, 17 et 19 du niveau élément binaire, c'est à dire qu'à chaque fois que le compteur 9 s'arrête, le mot correspondant de 26 est passé dans le séquenceur 27, Le fait d'initialiser 27, ce qui se traduit par un bit placé dans le mot correspondant de 26 entraîne que l'octet de procédure reçu après le drapeau est déchargé dans une mémoire 28 par 12 au lieu d'aller dans 14, cet aiguillage étant provoqué par le contenu de 27 au moment du déchargement de 12. Le second octet de procédure est aiguillé de la même façon de 12 vers 28.

A la réception d'un drapeau de synchronisation, que l'on suppose être le dernier d'une trame reçue d'une ligne entrante les moyens propres associés à 11 fonctionnent comme précédemment, mais les deux octets de CRC qui précèdent le drapeau sont détruits. Il faut noter que ces deux octets n'ont pourtant pas été inutiles car ils sont utilisés dans l'opérateur 15 pour le calcul du CRC.

En variante, entre la sortie de données de 5 et les entrées de série de 11 et 15, il est prévu un registre à décalage 11' d'une longeur de 16 bits, associé à une mémoire 5' constituée de 128 mots de seize bits correspondant aux lignes entrantes. Le registre 11' et la mémoire 5' fonctionnent l'un vis à vis de l'autre comme 11 et 5. Il en résulte que chaque bit atteignant l'entrée de 11 ne provient pas directement de 5, mais du dernier étage de 11' au moment où 5 délivre un bit de la même ligne à l'entrée de 11'. Il en résulte que quand le drapeau indiquant la fin d'une trame se trouve dans la première partie de 11', l'octet de CRC immédiatemment précédent se trouve dans la seconde partie de 11' et que l'autre octet de CRC se trouve dans 11. Donc, si les moyens de reconnaissance du drapeau de synchronisation sont associés à la première partie de 11' au lieu d'être associée à 11, la détection de fin permet de détruire simplement les deux octets de CRC qui précèdent à leur arrivée dans 11.

La mémore 28 comprend plusieurs sous-mémoires. FiFo parallèles 28a, recevant les octets de procédure, 28b, recevant les ebs de 1' adresse de la ligne concernée par l'octet, et 28c, recevant éventuellement d'autres bits de service, comme on verra dans la suite. La sortie de mémoire FiFO 28 est reliée à une entrée d'une processeur 29 qui gère l'ensemble du fonctionnement et les relations avec le commutateur 2.

Une mémoire 30 du type "boîte à lettres" comportant 128 mots de neuf ebs, dont sept ebs forment le début d'un octet de procédure et les deux derniers bits une information pour activer le séquenceur 27, est reliée à une sortie du processeur 29. A chaque début de trame à transmettre par une ligne sortante, le processeur inscrit dans la mémoire 30, à l'adresse de cette ligne, un premier octet de procédure. Quand la mémoire 26 est explorée par le compteur 9, de la même manière que pour les mémoires du niveau élément binaire, et que la ligne sortante est concernée, les deux derniers bits sont traités dans le séquencer 27. L'octet de procédure est alors transmis de 30, au lieu de 13, vers 12 pour être transmis en ligne comme on l'a déjà décrit. De plus, le séquenceur 27 envoie à la mémoire 28 des bits de service, avec l'adresse de la ligne indiquant le départ du premier octet de procédure, pour informer 29 de cette action. Le processeur 29 peut alors inscrire dans 30 le second octet de procédure, qui est aiguillé de même vers 12 par 27. A noter encore que dès que le séquenceur 27 a reçu de 30 l'information qu'une trame va être transmise sur la ligne sortante considérée, cette information étant inscrite dans 30 par 29 avant le 1er octet de procédure, le séquenceur 27 met à "1" le compteur 20, comme pour l'arrivée d'une trame, et fait transmettre le drapeau de synchronisation par des moyens propres, non montrés, associés à 11.

Le niveau octet comporte encore une mémoire FiFo 31 et une mémoire de comptage de trame 32, laquelle est constituée de 128 mots de 3 bits, chaque mot correspondant à une ligne sortante. Au cours de la transmission des octets de données, chaque fois que la mémoire 13 s'est vidée d'un octet vers la mémoire 12, le séquenceur de la mémoire 26 transmet à la mémoire 31 le numéro de la ligne correspondant au mot de mémoire 13 vidé et, simultanément, la mémoire 32 transmet à la mémoire 31 le numéro de la trame concernée. Cet ensemble de données de fonctionnement forme par le numéro de ligne et le numéro de trame constitue une requête dans 31. Bien entendu, une requête est inscrite dans 31 dès l'envoi du second octet de procédure de manière que le premier octet de données suive immédiatement le second octet de procédure sans trou, et ainsi de suite.

L'étage octet comporte encore une mémoire de comptage de trame 33 qui est associée à une partie de la mémoire FiFo 25. A chaque octet de données reçu dans la mémoire 14, dont on sait qu'il est accompagné de l'identité de la ligne entrante, par laquelle l'octet a été reçu, cette identité étant alors inscrite dans la mémoire 25, la mémoire 33 qui est constituée de 128 mots de trois bits, associe le numéro de la trame dont fait partie l'octet. L'ensemble des données de fonctionnement formé par le numéro de ligne et le numéro de trame constitue une requête dans 25.

L'interface comporte encore un étage trame qui comprend une mémoire à double ports d'entrée et de sortie 34 prévue pour emmagasiner les paquets à émettre et une mémoire à double ports d'entrée et de sortie 35 prévue pour emmagasiner les paquets reçus des lignes. La mémoire 34 est associée à une mémoire de pointeurs 36, comprenant son opérateur calculateur de pointeur, non montré, tandis que la mémoire 35 est associée à une mémoire de pointeurs 37, comprenant son opérateur calculateur de pointeur, non montré, La mémoire 34 comporte une entrée 38' par laquelle le commutateur peut la charger de paquets à transmettre, une sortie d'octets reliée à la mémoire 13 et une entrée d'adressage de lecture reliée à la sortie de la mémoire de pointeurs 36. La mémoire 35 comporte une sortie 39' par laquelle le commutateur 2 peut y lire les paquets reçus, une entrée d'octets reliée à la mémoire 14 et une entrée d'adressage d'écriture reliée à la sortie de la mémoire de pointeurs 37.

Les mémoires 34 et 35 sont prévues avec des accès directs mémoire constitués, pour chacun, par un multiplex canal classique, chaque canal étant défini par un mot de pointeur.

La mémoire de pointeurs 36 est reliée à la sortie de la mémoire FiFo 31 et, à chaque lecture d'une nouvelle requête à la sortie de 31, son opérateur calcule un mot de pointeur pour permettre la lecture dans 34 du prochain octet à inscrire dans le mot concerné de la mémoire 13. Les éléments du calcul sont transmis à la mémoire 36 par le processeur 29 par la liaison 38 car le processeur a été informé par le commutateur 2 des zones où ce dernier a inscrit les paquets à transmettre, dans 34.

Le mémoire de pointeur 37 est reliée à la sortie de la mémoire FiFo 25 et, à chaque lecture d'une nouvelle requête à la sortie de 25, son opérateur calcule un mot de pointeur pour permettre l'écriture, par le canal multiplex associé, dans 35 du nouvel octet sortant de 14. Ainsi, l'octet reçu sortant de 14 est bien inscrit à une place libre dans la mémoire 35. Les éléments du calcul permettant à l'opérateur de 37 de calculer le mot de pointeur en fonction de la sortie de 25 sont transmis du processeur à 37 par la liaison 39, le processeur ayant choisi les zones d'emmagasinage dans 35 et pouvant donner à 2 leurs adresses afin que 2 puisse en tirer les paquets.

On va maintenant décrire le fonctionnement de l'interface à la fin de la réception d'une trame. Comme on l'a mentionné ci-dessus, les deux octets de CRC ne sont pas envoyés dans 14, mais avant d'être détruits, ils font l'objet, élément binaire par élément binaire, du calcul du code de redondance cyclique dans l'opérateur 15 de 16. Le résultat de ce calcul est envoyé avec l'identité de la ligne dans la mémoire 28, sous la commande du séquenceur 27 qui à la réception du drapeau de fin est activé par les moyens, non montrés, reconnaissant le drapeau de fin. Si le résultat du calcul de CRC, qui entre dans le processeur 29 par 28, est positif, le processeur 29 l'enregistre afin de pouvoir renvoyer un accusé de réception, par la ligne sortante correspondante, au terminal distant dont est issue la trame reçue. En pratique, l'accusé de réception peut être envoyé dès la réception de la trame, ou, selon le programme du processeur, un accusé de réception peut concerner plusieurs trames reçues. L'accusé de réception est évidemment transmis par la ligne sortante sous la forme d'une trame, avec drapeau de début, octets de procédure, etc. Donc, les échanges d'information entre 29 et 27 sont semblables à ceux qui ont été mentionnés ci-dessus, sauf que le contenu utile de la trame sort entièrement de 30 et non de 13, vers 12. Pour cela, les bits des ordres donnés par 29 à 27 sont significatifs. Si le résultat du calcul est négatif, on a pratiquement la même procédure, c'est à dire que 29 va élaborer une message demandant une répétition de la trame, ce message étant envoyé comme un accusé de réception. A noter que les contenus des octets de procédure permettent de reconnaître si une trame reçue est une trame ordinaire, avec son numéro, ou s'il s'agit d'un accusé de réception ou encore d'un message demandant une répétition.

A noter encore qu'à la réception de chaque trame correcte de données utiles, le compteur de trame 33 voit le contenu du mot correspondant à la ligne entrante incrémenté. Par contre, en cas d'invalidation de la trame, comme la répétition de celle-ci est demandée, il faut décrémenter. C'est pourquoi la mémoire 33 comporte un opérateur non montré qui permet de faire ces opérations sous le contrôle de 29. La mémoire 33 et son opérateur forment d'ailleurs une structure tout à fait semblable à celle de 11—12, 15—16, etc., c'est à dire que son adressage est commandé par le compteur 9 à l'arrêt.

A noter que la mémoire 32 est tout à fait semblable à 33, mais a un fonctionnement réciproque, c'est à dire qu'à chaque trame envoyée sur une ligne sortante, le contenu du mot correspondant est incrémenté, mais s'il y a demande de répétition par le terminal distant, il faut bien entendu décrémenter le contenu de ce mot. La capacité des mots des mémoires 32 et 33 est limitée à 3 bits simplement parce que on admet que la répétition d'une trame est demandée avant d'en avoir reçu plus de sept.

Il est bien évident que le processeur 29 peut être un calculateur puissant dont les liaisons avec l'interface se font par l'intermediaire de la mémoire 30 pour donner des ordres et de la mémoire FiFo 28 pour recevoir des informations, au cours des transmissions des trames, et par l'intermédiaire de 38 et 36 pour indiquer quels sont les paquets destinés, dans 34, à constituer une trame dont le numéro se trouvera dans 32, le numéro de la ligne formant avec le numéro de trame la requête pour le calcul du mot de pointeur, ainsi que par l'intermédiaire de 39 et 37 pour savoir où sont rangés dans 35 les paquets d'une trame reçue. En pratique, il apparaît à la lecture des tâches confiées à 29 qu'un calculateur peut les effectuer à condition d'être programmé correctement et d'être assez rapide pour traiter les demandes de traitement issues de la mémoire FiFo 28, en plus des traitements qu'il décide en ce qui concerne les lignes sortantes. A noter que les demandes issues de 28 sont nettement inférieurs aux débits des lignes puis qu'elles n'apparaissent qu'en début et en fin de trame.

A titre d'exemple, on va décrire dans la suite une structure de processeur capable de constituer le processeur 29.

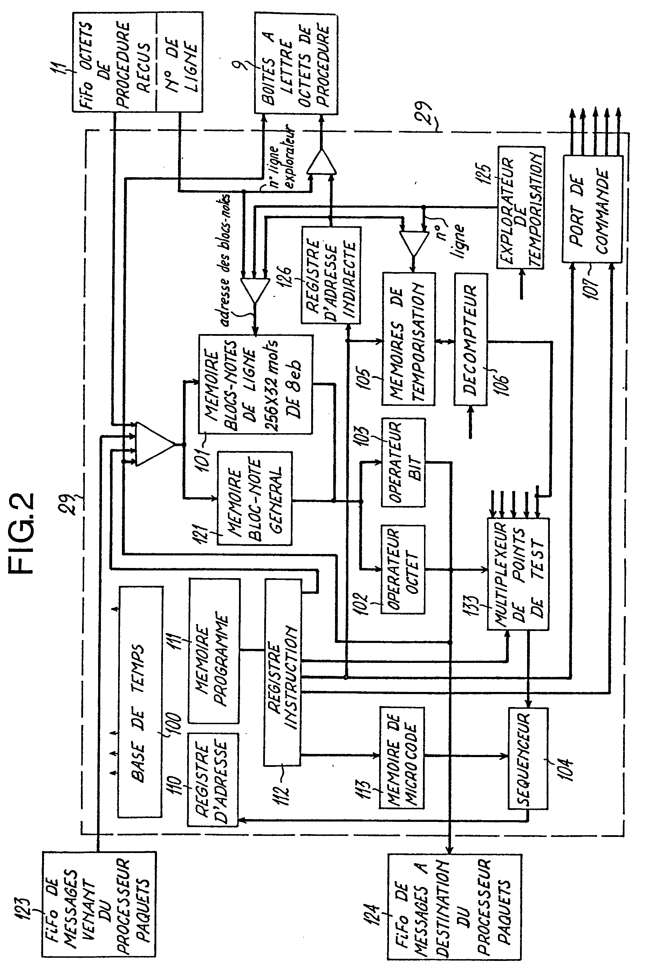

Le processeur 29 de la Fig. 2 comprend une base de temps 100, une mémoire bloc-note de ligne 101, un opérateur octet 102, un opérateur élément binaire 103, un séquenceur 104, une mémoire de temporisation 105, un décompteur 106, un port de commande 107, un registre d'adresse 110, une mémoire de programme 111, un registre d'instructions 112, une mémoire de microcodes 113, une mémoire bloc-note général 121, un explorateur de temporisation 125, un registre d'adresse indirecte 126, un multiplexeur de points de test 133, et une pluralité de dispositifs d'entrée de ces circuits représentés par des triangles.

Le processeur 29 est en relation avec le commutateur 2 par l'intermédiaire d'une mémoire d'entrée 123 et d'une mémoire de sortie 124 Il est en relation avec les étages de l'interface par les mémoires 28 et 30 et les liaisons 38 et 39.

La base de temps 100 fournit tous les signaux d'horloge nécessaires. Les requêtes de traitement provenant du commutateur 2 sont reconnues dans la mémoire d'entrée 123 par laquelle 2 indique à 29 à quelle plate il met des paquets dans 34 et à quel terminal distant ils sont destinés. Par 124, 29 fait savoir à 2 les adresses de zones des paquets dans 35. Ces requêtes mettent en place les mémoires bloc-notes 101 où sont rangés les contextes propres au traitement, et mettent également en place la mémoire bloc-note générale 121. Chaque contexte est affiché devant les opérateurs 102 et 103 chargés d'exécuter les commandes contenues dans les instructions du programme au niveau de l'octet et au niveau de l'élément binaire. Les tests de branchement ont lieu par l'intermédiaire du multiplexeur 133 mis en action par le séquenceur 104.

L'opérateur de temporisation est constitué par le décompteur 106 et la mémoire 105 laquelle fonctionne d'après les addresses fournies par l'explorateur 125. Cet opérateur intervient dans le traitement des procédures de transmission en leur accordant le temps nécessaire pour prendre en compte, à rebours, le temps pour chacune des 256 lignes. De la sorte, ces temporisations sont adaptées au genre de traitement.

Quand une de ces temporisations parvient à son terme, ce fait est noté dans la file d'attente 105 ce qui évite les contraintes dues aux requêtes simultanées.

La mémoire de microcodes 113 est mise en service par le registre d'instructions 112 et déclenche un cycle de 250 nanosecondes qui comprend la prise en compte de l'adresse de la prochaine instruction dans le registre 110, l'acquisition du mot instruction dans la mémoire programme 111, le chargement du registre pipeline 112 jusqu'à l'exécution de l'instruction proprement dite dans l'opérateur octet 102 ou l'opérateur élément binaire 103, et le branchement à l'instruction suivante dans le séquenceur 104, les conditions de branchement étant délivrées par le multiplexeur de points de test 133 aiguillé par une adresse de points de test fournie par un champ d'octets spécifiques de l'instruction de 112.

La Fig. 3h montre un créneau de 250 nanosecondes qui exprime le temps total d'éxécution d'une instruction de 250 ns, ce temps se décomposant comme l'illustrent les Figs. 3i à 3m dans lesquelles les temps ont été dilatés par rapport au temps de la Fig. 3h.

La Fig. 3i illustre le temps d'affichage de l'adresse de la nouvelle instruction.

La Fig. 3j illustre l'appel de l'instruction recouvrant le temps d'accès à la mémoire programme dès lors que l'adresse de l'instruction fournie par le séquenceur 104 est stablisé, sont 75 nanosecondes après.

La Fig. 3k illustre le temps d'accès à la mémoire de microcodes 113 qui explicite le code de l'instruction à exécuter sous la forme de microcommandes propres a piloter le séquenceur 104 des opérateurs et à aiguiller les chemins de données et de test. Le code d'instruction comportant huit bits se trouve ainsi dilaté en un champ de microcommandes parallèles à quarante bits, qui est complété par les vingt-quatre bits du code instruction (à trente-deux ebs) proprement dit.

La Fig. 3l illustre le temps où a lieu l'exécution de l'instruction proprement dite à l'aide des quarante bits de microcode, plus les vingt-quatre bits de code, soit une instruction de soixante-quatre bits dont la puissance est importante par le parallèlisme qu'elle permet en un temps de cycle aussi bref que 250 nanosecondes.

La Fig. 3l illustre également le temps de chargement de l'adresse de la nouvelle instruction qui résulte des décisions du séquenceur 104 en fonction des paramètres de branchement ou de continuité en séquence pris en compte dans ladite instruction de 250 nanosecondes.

Il va de soi que les opérations de calcul proprement dites s'exécutent parallèlement aux décisions de séquencement à l'intérieur du même cycle de 250 nanosecondes pendant le temps montré à la Fig. 3l.

La Fig. 3m illustre le temps de rangement des résultats.

En fait, on doit noter que, dans le processeur 29 de la Fig. 2, grâce à un arrangement, suivant l'invention, toutes les microopérations intervenant habituellement, pendant le temps de 250 nanoseconds d'une instruction, en séquence pour l'exécution de l'instruction, ont été mises en parallèle.

Cet arrangement est complété par un dispositif de test et de branchement sur des vecteurs paramétrables de un à quatre bits autorisant de une à seize décisions simultanées en une seule instruction de 250 ns.

Dans le processeur de la Fig. 2 on a également associé une mémoire et un opérateur dit de temporisation chargé de prendre en compte le paramètre temps intervenant dans le traitement des procédures de transmission. Cet arrangement permet ainsi le compte à rebours pour chacune des 256 lignes entrantes ou sortantes d'une temporisation personnalisée inutilisée par le processeur. Le débordement de cette temporisation est ensuite noté dans le mécanisme de file d'attente intégré au dispositif qui évite les contraintes de requêtes simultanées au processeur, comme pour tous les autres événements susceptibles de requérir un traitement de la part du processeur.

**Revendications**

1. Dispositif d'interface entrée-sortie monté entre un commutateur de données et une pluralité de voies de transmission de données entrantes et sortantes, les données étant traitées dans le commutateur de données par "paquets" et étant transmises sur les voies de transmission par "trames", chaque trame contenant un ou plusieurs paquets de données, chaque paquet étant formé d'une pluralité d'octets de données, chaque voie de transmission de données comportant une ligne de transmission de données et une ligne de transmission d'horloge, comportant un étage élément binaire qui comprend un multiplexeur (5) relié aux lignes entrantes de transmission de données et un démultiplexeur (4) relié aux lignes sortantes de transmission de données (3a1.—3a.128), un circuit de base de temps (21) engendrant un cycle d'opérations élémentaires, une pluralité de mémoires d'opération sur élément binaire (12, 16, 17, 19) associées chacune à un opérateur logique (11, 15, 18, 20) capable d'exécuter l'opération logique ou arithmétique affectée à la mémoire associée, caractérisé en ce qu'il comprend encore un explorateur d'état de ligne (10) explorant cycliquement successivement les lignes de transmission d'horloges (3b.1—3b.128 et 3d.1—3d.128), le cycle de l'explorateur (10) étant sensiblement inférieur à la durée la plus faible d'une élément binaire transmis sur les voies (3a.1—3a.128 et 3c.1—3c.128) chaque mémoire d'opération sur élément binaire (12, 16, 17, 19) étant constituée d'autant de mots que de voies entrantes ou sortantes, les adressages des mots dans chaque mémoire d'opération sur élément binaire ainsi que les adressages du multiplexeur et du démultiplexeur étant déterminés par la position dudit explorateur (10), le changement d'état par transition d'une ligne de transmission d'horloge provoquant l'arrêt de l'explorateur (10) qui déclenche alors ledit adressage et le fonctionnement dudit circuit de base de temps (21) pendant un cycle d'opérations élémentaires, chaque mémoire d'opération sur élément binaire avec son opérateur effectuant pendant ledit cycle d'opération élémentaire l'opération logique ou arithmétique qui lui est affectée, et, à la fin dudit cycle d'opérations élémentaires, ledit explorateur (10) reprenant son exploration.

2. Dispositif suivant la revendication 1, caractérisé en ce qu'une (19) des mémoires d'opération sur élément binaire est, avec son opérateur associé (20), affectée à la définition de l'horloge octet, l'opérateur (20) étant constitué par un compteur modulo 8 et comptant pour chaque ligne de la mémoire (19) adressée par l'explorateur (10) les bits transmis ou reçus.

3. Dispositif suivant la revendication 2, caractérisé en ce que l'opérateur (20) de la mémoire d'opération sur élément binaire affectée à l'horloge octet (19) est relié à base de temps (21) par une liaison de commande (22) qui modifie le cycle d'opérations élémentaires à chaque 8e bit transmis sur une ligne ou reçu d'une ligne.

4. Dispositif suivant l'une des revendications 1 à 3, caractérisé en ce qu'une des mémoires d'opération sur élément binaire est, avec son opérateur associé (11) une mémoire de sérialisation désérialisation (12), ledit opérateur associe (11) étant un registre à décalage.

5. Dispositif suivant l'une des revendications 1 à 5, caractérisé en ce qu'une des mémoires d'opération sur élément binaire est, avec son opérateur associé (15), une mémoire de calcul de redondance cyclique (16).

6. Dispositif suivant l'une des revendications 1 à 5, caractérisé en ce qu'il comporte encore un étage octet et un processeur (29), l'étage d'octets comprenant des mémoires d'opération sur octet (13, 14), avec leurs opérateurs associés, une mémoire de séquence d'octets (26), avec son opérateur séquenceur (27), ledit processeur (29) étant relié à la mémoire de sérialisation désérialisation (12, à la sortie de l'explorateur (10) et de la mémoire d'opération de calcul de redondance (16) de l'étage d'élément binaire et à l'opérateur séquenceur (20) de l'étage d'octets par une mémoire d'entrée du type "premier entré—premier sorti" (28) et une mémoire de sortie du type "boîte à lettres" (30), laquelle est adressée en lecture, comme les autres mémoires d'opération d'octets, par ladite mémoire de séquence d'octets (26) laquelle est rendue active, par son opérateur séquenceur (27), au huitième élément binaire d'un octet quand elle est adressée par ledit explorateur (10).

**Patentansprüche**

1. Eingangs-Ausgangs-Schnittstellenvorrichtung zwischen einem Datenvermittler und einer Vielzahl von abgehenden und eingehenden Datenübertragungskanälen, mit einer Verarbeitung der Daten in dem Datenvermittler in "Paketen" und Übertragung der Daten in den Übertragungskanälen in "Rahmen", wobei jeder Rahmen ein oder mehrere Datenpakete enthält und jedes Paket durch eine Vielzahl von Daten-Bytes gebildet wird, une wobei jeder Datenübertragungskanal eine Datenübertragungsleitung und eine Taktübertragungsleitung enthält, wobei die Vorrichtung zusammengesetzt ist aus einer Bitstufe, die einen mit eingehenden Datenübertragungskanälen verbundenen Multiplexer (5) und einen mit abgehenden Datenübertragungskanälen (3a.1—3a.128) verbundenen Demultiplexer (4) enthält, aus einer Zeitbasisschaltung (21), die einen elementaren Operationszyklus erzeugt, aus zahlreichen Bit-Operationsspeichern (12, 16, 17, 19) die jeweils einem logischen Operator (11, 15, 18, 20) zugeordnet sind, der in der Lage ist, die logische oder arithmetische Operation auszuführen, die dem zugehörigen Speicher zugeordnet ist, dadurch gekennzeichnet, daß die Vorrichtung ferner einen Leitungszustandabtaster (10) enthält, der zyklisch nacheinander die Taktübertragungsleitungen (3b.1—3b.128 und 3d.1—3d.128) abtastet, daß der Zyklus des Abtasters wesentlich kürzer als die kürzeste Dauer eines über die Kanäle (3a.1—3a.128 und 3c.1—3c.128) übertragenen Bits ist, daß jeder Bit-Operationsspeicher (12, 16, 17, 19) aus so vielen Worten aufgebaut ist, wie eingehende und abgehende Kanäle vorhanden sind, daß die Wortadressierung in jedem Bit-Operationsspeicher sowie die Adressierung des Multiplexers und des Demultiplexers durch die Position des Abtasters (10), bestimmt ist, daß jede Zustandsänderung bei Übergang auf eine Taktübertragungsleitung den Abtaster (10) anhält, der dann die Adressierung und die Operation der Zeitbasisschaltung (21) für einen elementaren Operationszyklus auslöst, daß der Bit-Operationsspeicher zusammen mit seinem Operator während des elementaren Operationszyklus die ihm zugeordnete logische oder arithmetische Operation ausführt und am Ende des elementaren Operationszyklus der Abtaster (10) seine Abtastung wieder aufnimmt.

2. Vorrichtung nach Anspruch 1, dadurch gekennzeichnet, daß einer (19) der Bit-Operationsspeicher mit seinem zugehörigen Operator (20) der Definition des Takt-Bytes zugeordnet ist, daß der Operator (20) aus einem Modulo-8-Zähler besteht und für jede Leitung des Speichers (19), die von dem Abtaster (10) adressiert wird, die ausgesendeten oder empfangenen Bits zählt.

3. Vorrichtung nach Anspruch 2, dadurch gekennzeichnet, daß der Operator (20) des Bit-Operationsspeichers (19), der dem Takt-Byte (19) zugeordnet ist, mit der Zeitbasisschaltung (21) über eine Steuerleitung (22) verbunden ist, die bei jedem achten Bit, das über eine Leitung ausgesendet oder über eine Leitung empfangen wird, den elementaren Operationszyklus modifiziert.

4. Vorrichtung nach einem der Ansprüche 1 bis 3, dadurch gekennzeichnet, daß einer der Bit-Operationsspeicher mit seinem zugeordneten Operator (11) ein Serialisierungs-Entserialisierungs-Speicher (12) ist, wobei der zugeordnete Operator (11) ein Schieberegister ist.

5. Vorrichtung nach einem der Ansprüche 1 bis 4, dadurch gekennzeichnet, daß einer der Bit-Operationsspeicher mit seinem zugeordneten Operator (15) ein Speicher (16) zur Berechnung der zyklischen Redundanz ist.

6. Vorrichtung nach einem der Ansprüche 1 bis 5, dadurch gekennzeichnet, daß diese ferner eine Byte-Stufe und einen Prozessor (29) enthält, daß die Byte-Stufe Byte-Operationsspeicher (13, 14) mit zugeordneten Operatoren enthält, daß ein Byte-Folgespeicher (26) mit seinem Folge-Operator (27) vorgesehen ist, daß der Prozessor (29) mit dem Serialisierungs-Entserialisierungs-Speicher (12), mit dem Ausgang des Abtasters (10) und des Speichers (16) zur Berechnung der zyklischen Redundanz in der Bitstufe sowie mit dem Folge-Operator (20) in der Byte-Stufe durch einen Eingangsspeicher (28) vom Typ "erst ein—erst aus" und einen Ausgangsspeicher (30) vom Typ "Briefkasten" verbunden ist, der in Leseoperation adressiert ist, wie die anderen Byte-Operationsspeicher von dem Byte-Folge-Speicher (26), der durch seinen Folge-Operator (27) für jedes achte Bite eines Bytes aktiviert wird, wenn er durch den Abtaster (10) adressiert worden ist.

**Claims**

1. An input-output interface device connected between a data switching exchange and a plurality of forward and backward data transmission channels, the data being processed in "packet" mode in the data switching exchange and being transmitted arranged in "frames" on the transmission channels, each frame containing one or several packets of data, each packet being composed of a plurality of data bytes, each data transmission channel comprising a data transmission line and a clock transmission line, said device comprising a bit stage that comprises a multiplexer (5) connected from the backward data transmission channels and a demultiplexer (4) connected to the forward data transmission channels (3a.1—3a.128), a time base circuit (21) generating an elementary operation cycle, a plurality of bit operation memories (12, 16, 17, 19), each bit operation memory being associated to a logic operator (11, 15, 18, 20) able to perform the logic or arithmetic operation assigned to the associated memory, characterized in that it further comprises a line condition scanner (10) cyclically scanning sequentially the clock transmission lines (3b1—3b.128 and 3d.1—3d.128), the scanner (10) cycle being substantially shorter than the shortest duration of a bit transmitted on said channels (3a.1—3a.128 and 3c.1—3c.128), each bit operation memory (12, 16, 17, 19) being constituted of as many words as backward and forward channels, word addressing in each bit operation memory as well as adressing of either the multiplexer or the demultiplexer being determined by the said scanner (10) position, any condition change by transition of any clock transmission line causing the scanner (10) to stop which then triggers the said addressing and the operation of the said time base circuit (21) for an elementary operation cycle, each bit operation memory together with its operator performing during said elementary operation cycle the logic or arithmetic operation assigned thereto, and, at the end of said elementary operation cycle, said scanner (10) resuming scanning.

2. A device according to claim 1, characterized in that one (19) among said bit operation memories, together with its associated operator (20), is assigned to the definition of the byte clock, the operator (20) being made of a modulo-8 counter and counting either the transmitted or the received bits for each row in the said memory (19) addressed by the scanner (10).

3. A device according to claim 2, characterized in that the operator (20) of the bit operation memory (19) assigned to the byte clock is connected to the time base circuit (21) by a control line (22) that modifies the elementary operation cycle for each 8th bit either transmitted to or received from a channel.

4. A device according to any of the claims 1—3, characterized in that one among the bit operation memory, together with its associated operator (11) is a serializing-deserializing memory (12), the said associated operator (11) being a shift register.

5. A device according to any of the claims 1—4, characterized in that one among the bit operation memories, together with its associated operator (15), is a cyclic redundancy computation memory (16).

6. A device according to any of the claims 1—5, characterized in that it further comprises a byte stage and a processor (29), the byte stage comprising byte operation memories (13, 14), together with associated operators, a byte sequence memory (26) with its sequencer operator (27), the said processor (29) being connected to the serializing-deserializing memory (12), the scanner (10) output and the cyclic redundancy computation memory (16) in the bit stage, and to the sequencer operator (20) in the byte stage by a "first in—first out" type input memory (28) and a "letter box" type output memory (30), which is addressed in read operation, as the other byte operation memories, from the said byte sequence memory (26) which is enabled by its sequencer operator (27) for each eighth bit of a byte when it has been addressed by the said scanner (10).

FIG.1

# FIG.2

**123** FiFo DE MESSAGES VENANT DU PROCESSEUR PAQUETS

**29**

**11** FiFo OCTETS DE PROCEDURE RECUS — N° DE LIGNE

BASE DE TEMPS **100**

**110** REGISTRE D'ADRESSE

**111** MEMOIRE PROGRAMME

**112** REGISTRE INSTRUCTION

**121** MEMOIRE BLOC-NOTE GENERAL

**101** MEMOIRE BLOCS-NOTES DE LIGNE 256X32 mots DE 8eb

adresse des blocs-notes

**126** REGISTRE D'ADRESSE INDIRECTE

n° ligne explorateur

**9** BOITES A LETTRE OCTETS DE PROCEDURE

**124** FiFo DE MESSAGES A DESTINATION DU PROCESSEUR PAQUETS

**113** MEMOIRE DE MICROCODE

**102** OPERATEUR OCTET

**103** OPERATEUR BIT

**105** MEMOIRES DE TEMPORISATION

n° ligne

**29**

**133** MULTIPLEXEUR DE POINTS DE TEST

DECOMPTEUR **106**

**125** EXPLORATEUR DE TEMPORISATION

**104** SEQUENCEUR

**107** PORT DE COMMANDE

0011 540

FIGS. 3

**Horloge de base 8MHz**

a

**Explorateur 4MHz**

b

*250ns*

c

*625ns*
h8

*500ns*
h1

*traitement bit courant h7*

c'

d

e

f

g

*625ns*

h

*250ns*

*temps de cycle d'une instruction du processeur.*

i

j

*75ns* *temps d'accès mémoire programme*

k

*temps d'accès mémoire de microcode*

l

*250ns* *temps d'exècution dans l'opérateur et le séquenceur*

m *rangement des résultats*

*Détail du cycle instruction du processeur trame*

3